# FASCICULE DE BREVET EUROPEEN

(11) **EP 3 677 463 B1**
(45) Date de publication et mention de la délivrance du brevet: **21.04.2021**
(21) Numéro de dépôt: 19216775.7
(22) Date de dépôt: 17.12.2019
(51) Int. Cl.: B60K 11/08

(54) **GUIDE D'AIR D'UNE FACE AVANT D'UN VEHICULE AUTOMOBILE**
LUFTFÜHRUNG EINER FRONTSEITE EINES KRAFTFAHRZEUGS
AIR GUIDE OF A FRONT FACE OF A MOTOR VEHICLE

(30) Priorité: 04.01.2019 FR 1900054
(43) Date de publication de la demande: 08.07.2020
(73) Titulaire: RENAULT s.a.s., 92100 Boulogne-Billancourt (FR)
(72) Inventeur: BUI, Joseph, 78130 Les Mureaux (FR); DAVID, Pascal, 78960 Voisins Le Bretonneux (FR)

(56) Documents cités:
- EP-A2- 3 269 576
- FR-A1- 3 006 633
- FR-A1- 3 026 797
- JP-A- H10 166 969

## Description

La présente invention se rapporte à un guide d'air destiné à être intégré à l'avant d'un véhicule, notamment un guide d'air structurel à fonction de face avant technique de moteur de véhicule automobile.

Un tel guide d'air a pour fonction de canaliser l'air pénétrant par au moins une ouverture ou grille d'aération dans la façade avant ou peau de bouclier avant d'un véhicule pour le conduire à un ensemble d'organes refroidisseurs regroupés dans ce qu'on appelle une « valise de refroidissement ». Par ce terme, on désigne l'ensemble des organes nécessaires au refroidissement du moteur, parfois empilés en couches ou en partie superposés. La valise de refroidissement comprend des échangeurs thermiques se composant classiquement d'un organe de refroidissement du liquide de refroidissement du moteur du véhicule, appelé échangeur thermique haute température ou radiateur haute température, et d'un condenseur pour le système de climatisation, et éventuellement de l'échangeur air-air (Refroidisseur Air Suralimentation - RAS).

Les différents échangeurs thermiques sont supportés par une structure située en partie avant du véhicule, en particulier en avant du bloc moteur, ladite structure étant appelée dans le métier « face avant technique » (ou par son acronyme « FAT »). Un guide d'air est par ailleurs fixé à l'avant desdits échangeurs thermiques. La FAT peut prendre de multiples formes. Dans certains cas, elle se réduit à une simple poutre transversale. Dans d'autres cas, elle constitue un châssis de forme plus ou moins complexe intégrant la valise de refroidissement. La FAT intègre différentes fonctions telles que support de butées de capot, support de serrure de capot ou d'un jambage supportant la serrure de capot, etc.

Les guides d'air actuels se composent d'au moins une paroi guide d'air, et en général de plusieurs parois guides d'air solidaires d'un cadre de fixation et agencées pour former un conduit de guidage de l'air entrant depuis la face avant du véhicule vers l'élément structurel du véhicule récepteur dudit guide, ledit conduit encadrant les échangeurs thermiques de la valise de refroidissement.

Lorsque le véhicule subit un choc, on constate qu'un tel guide d'air casse et vient toucher le faisceau des échangeurs, notamment de l'échangeur haute température qui est de taille importante. Ceci impose alors, pour réparer le véhicule, de remplacer le(s) échangeur(s). De telles réparations sont coûteuses, et par ailleurs impliquent aussi des surcoûts des primes d'assurances

Des guides d'air de face avant de véhicule sont connus des documents EP 3 269 576 A2, JP-H10-166969 A, FR 3 006 633 A1 et FR 3 026 797 A1.

L'invention vise à proposer un guide d'air de face avant d'un véhicule qui ne vienne pas endommager les échangeurs thermiques lors de chocs.

A cet effet l'invention propose un guide d'air configuré pour être intégré à l'avant d'un véhicule automobile, entre une face avant dudit véhicule et au moins un échangeur thermique dudit véhicule, ledit guide d'air comprenant au moins une paroi guide d'air et un cadre de fixation présentant une partie avant et une partie arrière, et définissant un plan moyen, ledit cadre étant apte à se fixer en sa partie arrière autour et à l'avant dudit au moins échangeur thermique, et ledit cadre étant composé de montants présentant chacun une partie avant et ladite au moins paroi guide d'air étant solidaire de ladite partie avant et orientée vers l'avant dudit cadre et selon une direction sensiblement normale audit plan moyen, caractérisé en ce que ladite partie avant de montant présente une portion en saillie de la face avant de ladite partie avant de montant, support d'une dite paroi, et une zone d'amorçage à la rupture présente à la jonction de ladite face avant de ladite partie avant de montant et de ladite portion en saillie support de paroi.

Lors de chocs, cette zone d'amorçage à la rupture oriente le mouvement de la paroi guide d'air vers l'intérieur du guide d'air et/ou le cas échéant vers l'extérieur, ce qui favorise la casse des parties qui supportent les parois du guide d'air. Par conséquent les faisceaux du ou des échangeurs thermiques entourés par le guide d'air ne sont pas heurtés lors d'un choc.

Avantageusement selon l'invention, ladite portion en saillie de la partie avant de montant s'étend tout le long de ladite partie avant dudit montant, et ladite zone d'amorçage à la rupture s'étend tout le long de ladite partie avant de montant et suivant un côté de ladite portion en saillie. Ceci évite de créer des points de résistance.

Selon un mode particulier de l'invention, ladite zone d'amorçage à la rupture est située du côté intérieur dudit guide d'air.

Selon un mode de réalisation particulier de l'invention, ladite portion en saillie de la face avant de ladite partie avant de montant, support de paroi, comprend deux zones d'amorçage à la rupture , l'une s'étendant le long de ladite partie avant de montant et suivant le côté intérieur de ladite portion en saillie et l'autre s'étendant le long de ladite partie avant de montant et suivant le côté extérieur de ladite portion en saillie.

Selon un mode de réalisation particulier de l'invention, ladite zone d'amorçage à la rupture se présente sous forme d'une rainure de section courbe ou de section triangulaire, ou d'une rainure à section combinée d'une partie courbe et d'une partie triangulaire. De préférence ladite partie triangulaire présentant une pointe qui s'insère dans ladite portion en saillie.

De préférence selon l'invention, ladite portion en saillie support de paroi comprend des pattes de maintien des parois dudit guide d'air.

. Les montants verticaux du guide d'air étant les plus sollicités lors des chocs, ils sont en priorité munis de zones d'amorçage à la rupture comme décrit selon l'invention, mais de préférence tous les montants porteurs de parois guides sont ainsi conçus, et sur toute leur longueur.

Selon un mode de réalisation particulier de l'invention, ladite partie avant de montant a une forme allongée à section en U et ladite portion en saillie de cette dite partie avant, support de paroi, fait saillie sur la face avant de la partie centrale du U en direction de l'avant du guide d'air.

Selon un mode de réalisation préféré de l'invention, ledit guide d'air est réalisé par moulage, ledit cadre étant réalisé par moulage d'une matière plastique rigide et lesdites parois guides d'air étant réalisées par moulage d'une matière élastomère.

L'invention a aussi pour objet un véhicule automobile comprenant une face avant équipée d'au moins un échangeur thermique à l'avant et autour duquel est fixé un guide d'air, ledit guide d'air étant tel que décrit précédemment.

D'autres particularités et avantages de l'invention ressortiront à la lecture de la description faite ci-après d'un mode de réalisation de l'invention, à titre indicatif mais non limitatif, en référence aux figures annexées et pour lesquelles :
[Fig.1] représente, selon une vue en perspective de trois-quarts d'un guide d'air suivant l'invention;
[Fig.2] illustre un guide d'air tel que celui de la figure 1, intégré à une face avant technique d'un véhicule automobile, selon une vue en coupe dans le plan vertical et en perspective de côté;
[Fig.3A] illustre une vue partielle en perspective de trois-quarts et de dessus d'un guide d'air suivant l'invention, tel que celui des figures 1 à 2, selon une coupe transversale dans le plan III-III ;
[Fig.3B] illustre un détail de la figure 3A selon l'invention ;
[Fig.4] illustre partiellement un guide d'air suivant l'invention, tel que celui des figures précédentes, avant et après un choc, selon une vue en coupe dans le plan transversal, et en perspective et de dessus ;
[Fig.5] illustre schématiquement, selon une vue en coupe transversale et de dessus, d'une partie de montant d'un guide d'air similaire à celui représenté aux figures 1 à 4, mais présentant deux formes particulières d'amorce à la rupture selon l'invention ;
[Fig.6] illustre schématiquement, selon une vue en coupe transversale et de dessus, d'une partie de montant d'un guide d'air similaire à celui représenté aux figures 1 à 4, mais présentant une autre forme particulière d'amorce à la rupture selon l'invention ;
[Fig.7] illustre schématiquement, selon une vue en coupe transversale et de dessus, d'une partie de montant d'un guide d'air similaire à celui représenté aux figures 1 à 4, mais présentant une autre forme particulière d'amorce à la rupture selon l'invention ;
[Fig.8] illustre schématiquement, selon une vue en coupe transversale et de dessus, d'une partie de montant d'un guide d'air similaire à celui représenté aux figures 1 à 4, mais présentant une autre forme particulière d'amorce à la rupture selon l'invention.

Dans la suite de la description, il est fait référence à un repère XYZ, pour lequel X est la direction longitudinale avant-arrière du véhicule récepteur du guide d'air selon l'invention, orientée vers l'arrière, Y est la direction transversale orientée vers la droite du véhicule, et Z est la direction verticale orientée vers le haut du véhicule.

Les directions du guide d'air correspondent ainsi aux directions du véhicule, sauf précisions contraires.

Des références identiques pourront être utilisées d'une figure à l'autre pour désigner des éléments identiques ou similaires.

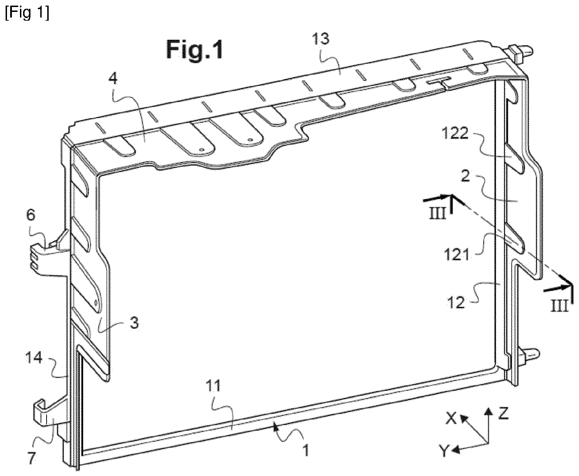

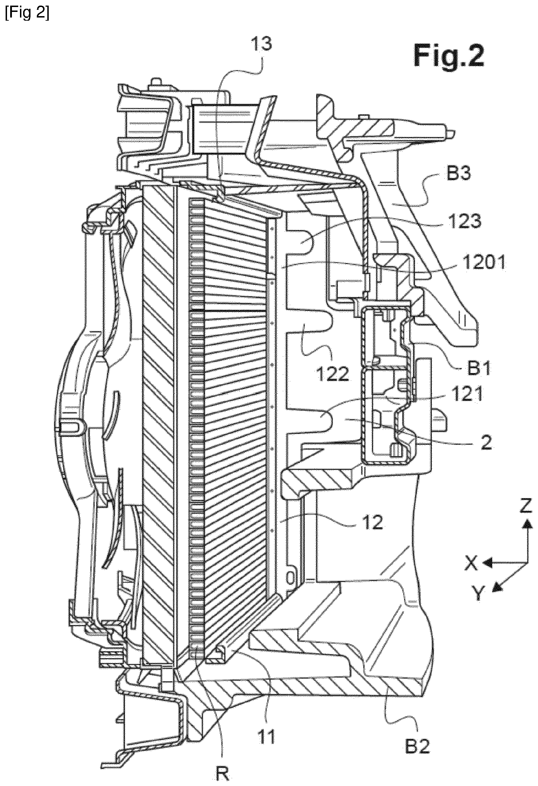

La figure 1 représente un guide d'air selon l'invention. Le guide d'air selon l'exemple se compose d'un cadre de fixation 1 et de parois 2, 3, 4 solidaires dudit cadre et disposées selon une direction sensiblement normale audit plan moyen défini par ledit cadre, pour former un conduit. Ledit cadre de fixation 1 est en outre muni de moyens de fixation 6, 7 permettant de le monter en le fixant en sa partie arrière à l'avant d'un échangeur thermique R comme représenté en figure 2.

La figure 2 représente une vue en coupe dans le plan vertical XZ d'un guide d'air selon l'invention dans sa fonction, intégré dans un ensemble de refroidissement de la face avant technique d'un véhicule. Ledit ensemble comprend des échangeurs thermiques dont au moins un échangeur thermique haute température R refroidisseur du liquide de refroidissement du bloc moteur formant l'échangeur thermique principal. Ledit guide d'air est fixé en sa partie arrière autour de cet échangeur thermique haute température R. Ledit guide d'air conduit l'air entrant depuis la face avant du véhicule, non représentée totalement sur les figures, vers les faisceaux du/des échangeurs thermiques R. A l'avant dudit guide d'air, sont présents des éléments composant le bouclier avant du véhicule, dont la traverse de bouclier B1 et des éléments de protection en mousse B2, B3.

Selon l'exemple de l'invention, le cadre de fixation du guide d'air comprend quatre montants assemblés selon une forme rectangulaire : deux montants horizontaux inférieur 11 et supérieur 13, et deux montants verticaux droit 14 et gauche 12. Ledit cadre est en général en matière polymère rigide, par exemple en polypropylène. Lesdits montants présentent en outre, respectivement en continuité de la partie principale allongée des montants, une partie avant 120 comprenant une portion avant allongée et en saillie support de paroi du guide d'air 1201, ladite portion 1201 étant dotée en particulier de pattes de maintien desdites parois 121, 122, 123. Lesdites pattes sont ainsi présentes de sorte que leur plan principal est orienté dans le plan vertical vers l'avant du cadre et suivant une direction perpendiculaire au plan moyen du cadre sensiblement vertical en position d'usage.

Selon l'exemple non limitatif, les parois du guide d'air se composent de deux parois guides d'air latérales gauche 2 solidaire du montant gauche 12 et droite 3 solidaire du montant droit 14, globalement de forme allongée, sensiblement parallèles entre elles et opposées, et qui sont sensiblement verticales, et d'une paroi guide d'air supérieure 2 solidaire du montant supérieur 13, sensiblement horizontale, adjacente en ses extrémités respectives à une extrémité respective desdites parois latérales.

Selon l'invention, lesdites pattes de maintien des parois sont donc portées par une portion avant de montant en saillie 1201. Ces pattes, telles que les pattes 121, 122, 123 du montant vertical gauche 12, visibles sur les figures 1 ou 2, maintiennent les parois du guide d'air qui sont en général en un matériau polymère souple, de type élastomère (caoutchouc), alors que ladite portion en saillie support 1201 et les pattes de maintien 121, 122, 123 des montants de cadre sont en matière rigide, comme la partie principale et la partie avant des montants du cadre. L'ensemble du cadre est réalisé par moulage de matière plastique, et il peut par exemple être réalisé d'une seule pièce. Les parois peuvent aussi être façonnées par moulage de matière élastomère pour former une seule pièce avec le cadre.

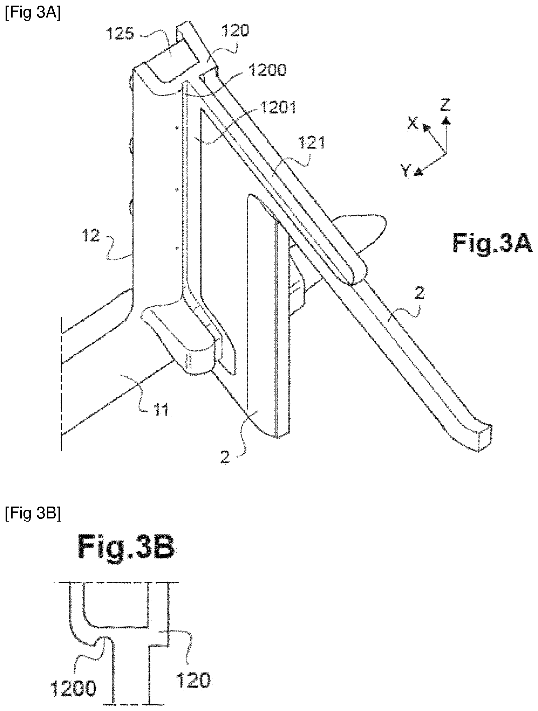

La figure 3A montre un détail du guide d'air illustré aux figures précédentes 1 et 2, selon une vue en coupe transversale, dans le plan XY, et en vue de côté et de dessus, au niveau du montant vertical gauche 12, et plus précisément suivant une coupe dans le plan III-III du montant au niveau d'une patte de maintien 121 de la paroi 2. Selon l'invention, le montant présente une zone d'amorce de rupture 1200, sous forme d'une rainure, qui s'étend le long dudit montant, en face avant et intérieure dudit montant, au niveau de la jonction de la partie avant de montant 120 et de la portion de montant en saillie 1201 support d'une paroi guide d'air 2, par prolongement en des pattes de maintien 121, 122, 123 de ladite paroi 2.

Selon l'exemple non limitatif de l'invention, le montant de cadre comprend une partie principale 125 sous forme d'un élément allongé à section sensiblement parallélépipédique, et une partie avant 120 recouvrant selon l'exemple la face avant et les deux faces latérales de la partie principale de montant. Ladite partie avant de montant 120, illustrée seule en figure 3B, comprend une portion allongée à section sensiblement en forme de U et ladite portion avant en saillie, support de paroi, 1201, allongée , en saillie de la face avant de la barre centrale du U, donc orientée vers l'avant et perpendiculairement à la partie en U. Ladite portion en saillie 1201 présente des zones de prolongement orientées vers l'avant dont le plan principal est dans le plan vertical, qui forment les pattes de maintien des parois 121, 122, 123. La zone interne ouverte du U reçoit ladite partie principale de montant 125. La zone d'amorçage à la rupture formée par ladite rainure 1200 est ainsi présente en creux à la jonction intérieure entre la portion en U et ladite portion en saillie 1201 comprenant les pattes de maintien des parois. Lors de chocs, cette rainure 1200 oriente le mouvement de la paroi 2 vers l'intérieur du guide d'air et favorise la casse des parties qui supportent la paroi du guide d'air. De préférence la zone d'amorçage à la rupture s'étend sur toute la longueur du montant du cadre de manière à ne pas créer de point de résistance.

Chaque montant du cadre, à tout le moins ceux porteurs d'une paroi guide d'air, est conçu avec une zone d'amorçage à la rupture comme le montant vertical droit 12 qui vient d'être décrit, soit aussi dans le cas de l'exemple le montant vertical gauche 14 et le montant supérieur 13. Plus particulièrement les montants verticaux étant les plus sollicités par les chocs, ils sont impérativement conçus comme décrit avec une zone d'amorçage à la rupture sur toute leur longueur.

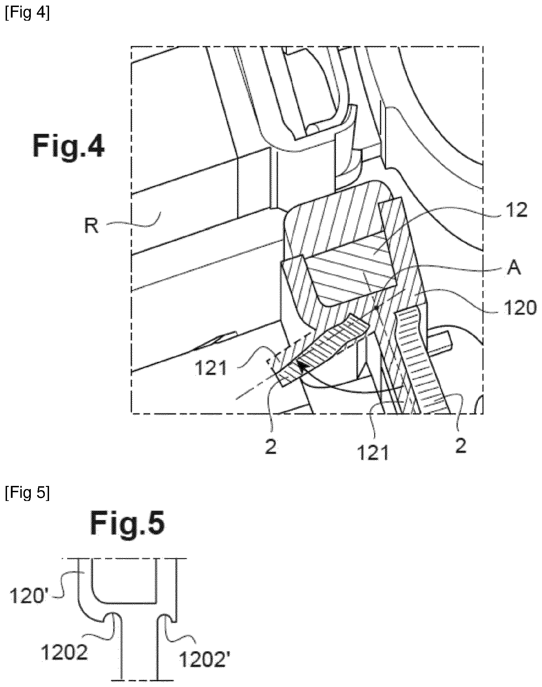

On comprend que lors d'un choc, latéral et/ou frontal , divers composants notamment ceux du bouclier avant B1, B2, B3 à l'avant du guide d'air comme illustré en figure 2, sont repoussés vers les parois du guide d'air, qui sont alors soumises à des contraintes, de l'extérieur vers l'intérieur c'est-à-dire en direction du centre du guide d'air, soit vers les faisceaux de l'échangeur thermique R, d'autant que la forme cintrée de la traverse du bouclier B1 favorise cette orientation. Comme l'illustre la figure 4, les portions en saillie 1201 des montants du cadre qui supportent directement les parois du guide d'air selon l'invention, fragilisées volontairement en la jonction rainurée 1200 (zone d'amorce de rupture), vont avoir tendance à pivoter en cette jonction rainurée (point A) et se rompre sous efforts induits par un choc vers le centre du guide d'air. De ce fait, les portions support des parois du guide vont se casser sans venir heurter violemment les faisceaux des échangeurs thermiques R.

Selon l'exemple particulier qui vient d'être illustré, la zone d'amorçage à la rupture a une forme de rainure arrondie, soit à section courbe (concave). D'autres formes peuvent être envisagées.

De plus deux zones d'amorçage à la rupture peuvent être prévue de chaque côté (à gauche ou à droite) de la portion de montant avant en saillie support de paroi, à la jonction avec la portion à section en U de la partie avant du montant, les dites zones pouvant être de formes similaires ou différentes. Le cas de deux zones d'amorçage à la rupture permet d'engendrer une rupture sous efforts aux chocs notamment latéraux qu'ils proviennent de la gauche et/ou de la droite du véhicule.

La figure 5 représente une partie avant de montant 120 'avec une portion en saillie support de paroi qui présente deux zones d'amorçage à la rupture, soit de part et d'autre de la portion en saillie support de paroi : une première zone 1202 située du côté droit de la portion et une deuxième zone 1202' située du côté opposé, soit du côté gauche de la portion, lesdites zones étant sous forme d'une rainure à section courbe, autrement dit ayant une forme arrondie.

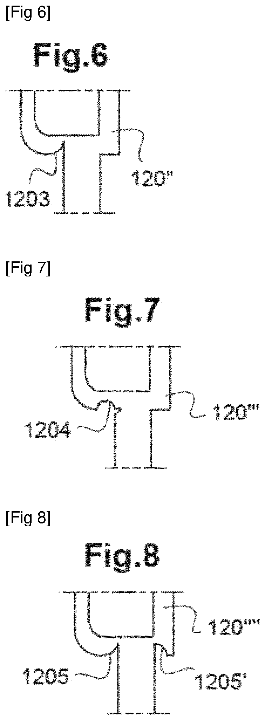

La figure 6 représente une partie avant de montant support de paroi 120" avec une portion en saillie support de paroi qui présente une zone d'amorçage à la rupture sous forme d'une rainure à section triangulaire 1203. On peut réaliser une zone d'amorce à la rupture de forme triangulaire plus inclinée que celle représentée sur cette figure 6, telle une entaille. On peut prévoir deux zones d'amorce à la rupture de forme triangulaire de part et d'autre de ladite portion en saillie support des parois (non représentée).

La figure 7 représente une partie avant de montant support de paroi 120''' avec une portion en saillie support de paroi qui présente une zone d'amorçage à la rupture sous forme d'une rainure de formes combinées courbe (en arrondi) et à section triangulaire 1204, la pointe de la forme triangulaire venant pénétrer dans ladite portion en saillie pour faire une entaille favorisant sous contraintes la rupture alors que la forme arrondie favorise l'orientation vers l'intérieur du guide .

La figure 8 représente une partie avant de montant support de paroi 120"" avec une portion en saillie support de paroi qui présente deux zones d'amorçage à la rupture, l'une d'un côté de ladite portion sous forme d'une rainure à section triangulaire 1205 et l'autre du côté opposé de ladite portion à section courbe (arrondie) 1205'.

Le guide d'air selon l'invention peut convenir à une face avant technique des véhicules à moteur de type automobiles, mais aussi de type camping-cars; véhicules utilitaires frigorifiques etc., car sur ce type de véhicule on augmente la taille des échangeurs thermiques et réduit la place disponible, ce qui rapproche les composants de la face avant technique du guide d'air.

## Revendications

1. Guide d'air configuré pour être intégré à l'avant d'un véhicule automobile, entre une face avant dudit véhicule et au moins un échangeur thermique (R) dudit véhicule, ledit guide d'air comprenant au moins une paroi guide d'air (2, 3, 4) et un cadre de fixation (1) présentant une partie avant et une partie arrière, et définissant un plan moyen, ledit cadre étant apte à se fixer en sa partie arrière autour et à l'avant dudit au moins échangeur thermique (R), et ledit cadre étant composé de montants (11, 12, 13, 14) présentant chacun une partie avant (120) et ladite au moins paroi guide d'air (2,3, 4) étant solidaire de ladite partie avant et orientée vers l'avant dudit cadre et selon une direction sensiblement normale audit plan moyen, **caractérisé en ce que** ladite partie avant (120) de montant (12) présente une portion en saillie (1201) de la face avant de ladite partie avant de montant, support d'une dite paroi (2), et une zone d'amorçage à la rupture (1200) présente à la jonction de ladite face avant de ladite partie avant de montant et de ladite portion en saillie (1201) support de paroi.

2. Guide d'air selon la revendication 1, **caractérisé en ce que** ladite portion en saillie (1201) de la partie avant de montant (120) s'étend tout le long de ladite partie avant dudit montant, et que ladite zone d'amorçage à la rupture s'étend tout le long de ladite partie avant de montant et suivant un côté de ladite portion en saillie.

3. Guide d'air selon l'une des revendications 1 à 2, **caractérisé en ce que** ladite zone d'amorçage à la rupture est située du côté intérieur dudit guide d'air.

4. Guide d'air selon l'une des revendications 1 à 3, **caractérisé en ce que** ladite portion en saillie de la face avant de ladite partie avant de montant (120'), support de paroi, comprend deux zones d'amorçage à la rupture (1202, 1202'), l'une s'étendant le long de ladite partie avant de montant et suivant le côté intérieur de ladite portion en saillie et l'autre s'étendant le long de ladite partie avant de montant et suivant le côté extérieur de ladite portion en saillie.

5. Guide d'air selon l'une des revendications 1 à 4, **caractérisé en ce que** ladite zone d'amorçage à la rupture se présente sous forme d'une rainure de section courbe (1200) ou de section triangulaire (1203), ou d'une rainure à section combinée d'une partie courbe et d'une partie triangulaire, ladite partie triangulaire présentant de préférence une pointe qui s'insère dans ladite portion en saillie.

6. Guide d'air selon l'une des revendications 1 à 5, **caractérisé en ce que** ladite portion en saillie support de paroi (1201) comprend des pattes de maintien (121, 122, 123) des parois dudit guide.

7. Guide d'air selon l'une des revendications 1 à 6, **caractérisé en ce que** ladite partie avant de montant (120) a une forme allongée à section en U et ladite portion en saillie (1201) de cette dite partie avant, support de paroi, faisant saillie sur la face avant de la partie centrale du U en direction de l'avant du guide d'air.

8. Guide d'air selon l'une des revendications 1 à 7, **caractérisé en ce que** ledit guide d'air est réalisé par moulage, ledit cadre étant réalisé par moulage d'une matière plastique rigide et lesdites parois guides d'air étant réalisées par moulage d'une matière élastomère.

9. Véhicule automobile comprenant une face avant équipé d'au moins un échangeur thermique (R) à l'avant et autour duquel est fixé un guide d'air, **caractérisé en ce que** ledit guide d'air est défini à l'une des revendications 1 à 8.

## Patentansprüche

1. Luftführung, konfiguriert, um vorne in einem Kraftfahrzeug zwischen einer Vorderseite des Fahrzeugs und mindestens einem Wärmetauscher (R) des Fahrzeugs eingebaut zu werden, wobei die Luftführung mindestens eine Luftführungswand (2, 3, 4) und einen Befestigungsrahmen (1) enthält, der einen vorderen Teil und einen hinteren Teil aufweist, und eine Mittelebene definiert, wobei der Rahmen in seinem hinteren Teil um den und vor dem mindestens einen Wärmetauscher (R) befestigt werden kann, und der Rahmen aus Holmen (11, 12, 13, 14) besteht, die je einen vorderen Teil (120) aufweisen, und die mindestens eine Luftführungswand (2, 3, 4) fest mit dem vorderen Teil verbunden und zur Vorderseite des Rahmens und gemäß einer zur Mittelebene im Wesentlichen normalen Richtung ausgerichtet ist, **dadurch gekennzeichnet, dass** der vordere Teil (120) des Holms (12) einen von der Vorderseite des vorderen Teils des Holms vorstehenden Abschnitt (1201), Träger einer Wand (2), und einen an der Schnittstelle der Vorderseite des vorderen Holmteils und des vorstehenden Wandträger-Abschnitts (1201) vorhandenen Sollbruchbereich (1200) aufweist.

2. Luftführung nach Anspruch 1, **dadurch gekennzeichnet, dass** der vorstehende Abschnitt (1201) des vorderen Holmteils (120) sich entlang des ganzen vorderen Teils des Holms erstreckt, und dass der Sollbruchbereich sich entlang des ganzen vorderen Holmteils und gemäß einer Seite des vorstehenden Abschnitts erstreckt.

3. Luftführung nach einem der Ansprüche 1 bis 2, **dadurch gekennzeichnet, dass** der Sollbruchbereich sich auf der Innenseite der Luftführung befindet.

4. Luftführung nach einem der Ansprüche 1 bis 3, **dadurch gekennzeichnet, dass** der vorstehende Abschnitt der Vorderseite des vorderen Holmteils (120'), Wandträger, zwei Sollbruchbereiche (1202, 1202') enthält, von denen der eine sich entlang des vorderen Holmteils und gemäß der Innenseite des vorstehenden Abschnitts erstreckt und der andere sich entlang des vorderen Holmteils und gemäß der Außenseite des vorstehenden Abschnitts erstreckt.

5. Luftführung nach einem der Ansprüche 1 bis 4, **dadurch gekennzeichnet, dass** der Sollbruchbereich in Form einer Rille mit gekrümmtem Querschnitt (1200) oder dreieckigem Querschnitt (1203), oder einer Rille mit einem Querschnitt kombiniert aus einem gekrümmten Teil und einem dreieckigen Teil vorliegt, wobei der dreieckige Teil vorzugsweise eine Spitze aufweist, die sich in den vorstehenden Abschnitt einfügt.

6. Luftführung nach einem der Ansprüche 1 bis 5, **dadurch gekennzeichnet, dass** der vorstehende Wandträger-Abschnitt (1201) Haltelaschen (121, 122, 123) der Wände der Führung enthält.

7. Luftführung nach einem der Ansprüche 1 bis 6, **dadurch gekennzeichnet, dass** der vordere Holmteil (120) eine längliche Form mit U-förmigen Querschnitt hat, und der vorstehende Abschnitt (1201) dieses vorderen Wandträger-Teils auf der Vorderseite des mittleren Teils des U in Richtung der Vorderseite der Luftführung vorsteht.

8. Luftführung nach einem der Ansprüche 1 bis 7, **dadurch gekennzeichnet, dass** die Luftführung durch Formen hergestellt wird, wobei der Rahmen durch Formen eines steifen Kunststoffs hergestellt wird, und die Luftführungswände durch Formen eines Elastomermaterials hergestellt werden.

9. Kraftfahrzeug, das eine Vorderseite enthält, die mit mindestens einem Wärmetauscher (R) ausgestattet ist, vor dem und um den eine Luftführung befestigt ist, **dadurch gekennzeichnet, dass** die Luftführung in einem der Ansprüche 1 bis 8 definiert ist.

## Claims

1. Air guide configured to be integrated at the front of a motor vehicle, between a front face of said vehicle and at least one heat exchanger (R) of said vehicle, said air guide comprising at least one air guide wall (2, 3, 4) and an attachment frame (1) that has a front part and a rear part and defines a median plane, said frame being able to be attached in its rear part around and to the front of said at least one heat exchanger (R), and said frame being made up of members (11, 12, 13, 14) each having a front part (120), and said at least one air guide wall (2, 3, 4) being joined to said front part and oriented towards the front of said frame and in a direction that is substantially normal to said median plane, **characterized in that** said front part (120) of the member (12) has a portion (1201) protruding from the front face of said member front part, which is a support for one said wall (2), and a rupture initiation zone (1200) present at the join between said front face of said member front part and said wall support protruding portion (1201) .

2. Air guide according to Claim 1, **characterized in that** said portion (1201) protruding from the member front part (120) extends along the entire length of said front part of said member, and **in that** said rupture initiation zone extends along the entire length of said member front part and along a side of said protruding portion.

3. Air guide according to either of Claims 1 and 2, **characterized in that** said rupture initiation zone is situated on the inner side of said air guide.

4. Air guide according to one of Claims 1 to 3, **characterized in that** said portion protruding from the front face of said member front part (120'), which is a wall support, comprises two rupture initiation zones (1202, 1202'), one extending along said member front part and along the inner side of said protruding portion and the other extending along said member front part and along the outer side of said protruding portion.

5. Air guide according to one of Claims 1 to 4, **characterized in that** said rupture initiation zone is in the form of a groove with a curved section (1200) or with a triangular section (1203), or in the form of a groove with a section that combines a curved part and a triangular part, said triangular part preferably having a point that is inserted into said protruding portion.

6. Air guide according to one of Claims 1 to 5, **characterized in that** said wall support protruding portion (1201) comprises tabs (121, 122, 123) for holding the walls of said guide.

7. Air guide according to one of Claims 1 to 6, **characterized in that** said member front part (120) has an elongate shape with a U-shaped section and said portion (1201) protruding from this said front part, which is a wall support, protrudes from the front face of the central part of the U in the direction of the front of the air guide.

8. Air guide according to one of Claims 1 to 7, **characterized in that** said air guide is produced by moulding, said frame being produced by moulding a rigid plastics material and said air guide walls being produced by moulding an elastomer material.

9. Motor vehicle comprising a front face, equipped with at least one heat exchanger (R) to the front of and around which an air guide is attached, **characterized in that** said air guide is defined in one of Claims 1 to 8.
